# FASCICULE DE BREVET EUROPEEN

(11) **EP 4 608 671 B1**
(45) Date de publication et mention de la délivrance du brevet: **28.10.2026**
(21) Numéro de dépôt: 23790372.9
(22) Date de dépôt: 19.09.2023
(51) Int. Cl.: B60K 35/22, B60K 35/00, B60K 35/10, B60K 35/28

(54) **PROCÉDÉ ET DISPOSITIF D'ASSISTANCE À LA RECHARGE EN ÉNERGIE D'UN VÉHICULE**
VERFAHREN UND VORRICHTUNG ZUR UNTERSTÜTZUNG DER ENERGIEAUFLADUNG EINES FAHRZEUGS
METHOD AND DEVICE TO ASSIST WITH THE ENERGY RECHARGING OF A VEHICLE

(30) Priorité: 27.10.2022 FR 2211190
(43) Date de publication de la demande: 03.09.2025
(73) Titulaire: Stellantis Auto SAS, 78300 Poissy (FR)
(72) Inventeur: QUINIO, Pierre, 78000 VERSAILLES (FR); TAHHAN, Aref Antoine, 78170 LA CELLE ST CLOUD (FR); SCIEUX, Benjamin, 75012 PARIS 12 (FR); MILLERAND, Mathieu, 92370 CHAVILLE (FR); FERON, Stephane, 92350 LE PLESSIS ROBINSON (FR)
(74) Mandataire: ESIP
(86) Numéro de dépôt international: PCT/FR2023/051430
(87) Numéro de publication internationale: WO 2024/089327

(56) Documents cités:
- EP-A1- 2 772 380
- DE-A1- 102010 010 620
- DE-A1- 102012 001 174

## Description

### Domaine technique

L'invention concerne l'assistance à la recharge en énergie d'un véhicule.

### Arrière-plan technologique

On connait par le document EP 3 135 526, une interface graphique affichant des indications relatives à une station de recharge. L'un des inconvénients d'une telle solution est que cet affichage est difficilement accessible puisqu'il nécessite de naviguer au travers de plusieurs menus. Un autre état de la technique pertinent est présenté dans le document DE102010010620A1.

### Résumé de l'invention

Un objet de la présente invention est de proposer une solution aux inconvénients précités et en particulier de faciliter l'accès à des informations du véhicule pour assister un utilisateur pour la recharge d'un véhicule sans pour autant augmenter la densité d'affichage des informations sur l'interface homme-machine.

A cet effet, l'invention a pour objet un procédé d'assistance à la recharge en énergie d'un véhicule comportant un écran tactile affichant une interface graphique, ladite interface graphique comprenant un premier objet graphique affiché en permanence, lorsque l'écran est allumé, et affichant au moins la vitesse du véhicule et au moins une jauge relative à un niveau d'énergie, ladite interface comportant en outre au moins un deuxième objet graphique affiché de façon éphémère, ledit procédé comportant des étapes de :
- détection d'un appui sur la jauge,
- en réponse à la détection d'un appui sur la jauge, commande de l'affichage d'une application de navigation indiquant au moins une station de rechargement en énergie.

L'invention permet de réduire le nombre d'étapes nécessaires pour accéder à une information. En appuyant sur le symbole de la jauge, l'utilisateur peut lancer une application de navigation vers une station rechargement. Ce raccourci vers l'application de navigation paramétrée avec des stations de rechargement est obtenu sans ajouter d'objet graphique supplémentaire dans l'interface et donc sans augmenter la densité d'informations sur l'interface graphique.

Avantageusement, le véhicule comporte un moteur thermique, la jauge étant relative à un niveau de carburant dans un réservoir du véhicule, la station de rechargement indiquée par l'application de navigation étant une station-service.

Avantageusement, le véhicule comporte un moteur électrique, la jauge étant relative à une quantité d'électricité dans une batterie du véhicule, la station de rechargement indiquée par l'application de navigation étant une station de recharge électrique.

Avantageusement, le véhicule comporte un moteur électrique et un moteur thermique, la jauge étant relative à une quantité d'électricité dans une batterie, la station de rechargement indiquée par l'application de navigation étant une station de recharge électrique, le premier objet graphique affichant en outre une deuxième jauge relative à un niveau de carburant dans un réservoir du véhicule, ledit procédé comportant en outre une étape de :
- détection d'un appui sur la deuxième jauge,
- en réponse à la détection d'un appui sur la deuxième jauge, commande de l'affichage d'une application de navigation indiquant au moins une station-service.

L'invention concerne aussi un programme d'ordinateur comprenant des instructions qui, lorsque le programme est exécuté par un ordinateur, conduisent celui-ci à mettre en œuvre le procédé selon l'invention.

L'invention concerne aussi un dispositif d'assistance à la recharge en énergie d'un véhicule, ledit dispositif comprenant une mémoire associée à au moins un processeur configuré pour la mise en œuvre des étapes du procédé selon l'invention.

L'invention concerne aussi un véhicule comportant un écran central et un dispositif selon l'invention.

### Brève description des figures

D'autres caractéristiques et avantages de l'invention ressortiront de la description des modes de réalisation non limitatifs de l'invention ci-après, en référence aux figures annexées, sur lesquelles :
[Fig. 1] illustre de façon schématique un habitacle d'un véhicule, selon un exemple de réalisation particulier de la présente invention ;
[Fig. 2] illustre schématiquement un dispositif d'assistance à la recharge en énergie d'un véhicule selon un exemple de réalisation particulier de la présente invention ;
[Fig. 3] illustre un premier exemple d'interface homme machine selon l'invention.
[Fig. 4] illustre schématiquement un procédé d'assistance à la recharge en énergie d'un véhicule, selon un exemple de réalisation particulier de la présente invention ;
[Fig. 5] illustre un deuxième exemple d'interface homme machine selon l'invention.

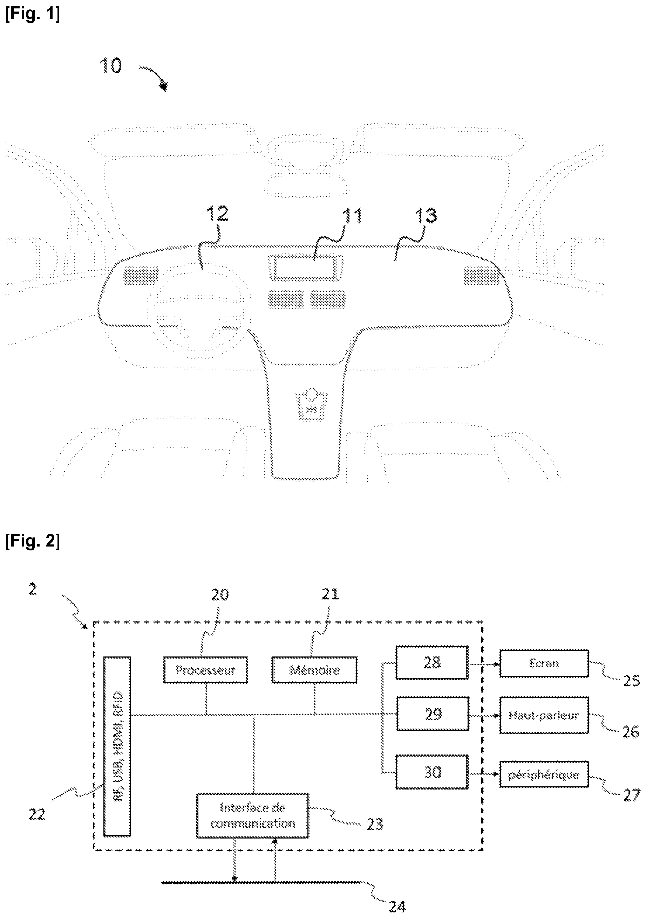

La figure 1 montre un habitacle de véhicule et en particulier une planche de bord 13. La planche de bord comporte 13, du côté conducteur, qui est dans l'exemple représenté sur le côté gauche du véhicule, un volant 12.

La planche de bord comporte, dans une partie centrale un écran 11. Il s'agit d'un écran tactile.

Le dispositif selon l'invention permet d'assister un utilisateur pour recharger en énergie un véhicule. Il est en particulier configuré pour commander l'affichage sur l'écran 11 et, notamment pour commander l'affichage d'une pluralité d'objets graphiques d'affichage de données appelés « widgets » sur l'écran 11.

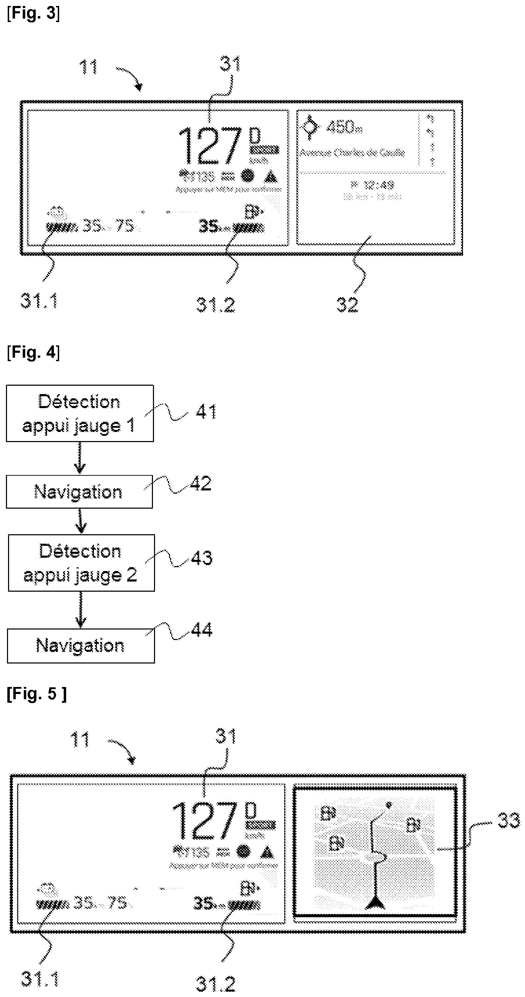

La figure 3 montre un exemple d'un affichage d'une pluralité d'objets graphiques 31, 32 sur l'écran 12.

Dans cet exemple, l'écran 11 affiche :
- Un premier objet graphique 31 affichant des informations telles qu'une vitesse de déplacement du véhicule, une valeur de vitesse limite pour le limiteur de vitesse, une limitation de vitesse détectée sur le segment de route parcouru par le véhicule, et
- Un deuxième objet graphique 32 affichant des informations de guidage.

Le premier objet graphique 31 affiché en permanence, lorsque l'écran 11 est allumé, et que le véhicule est dans une phase roulage (autrement dit le véhicule est en cours de déplacement). Le premier objet graphique 31 affichant au moins la vitesse du véhicule et une première jauge 31.1. La première jauge 31.1, est relative à un niveau de batterie du véhicule. Dans cet exemple, on suppose que le véhicule est dit hybride, c'est-à-dire qu'il comporte un moteur électrique et un moteur thermique. La première jauge 31.1 indique un niveau d'énergie de la batterie de traction.

Le premier objet graphique 31 affiche en outre une deuxième jauge 31.2 relative à un niveau de carburant dans un réservoir du véhicule.

Le deuxième objet graphique 32 est affiché de façon éphémère, autrement dit, il peut être remplacé par un autre objet graphique ou bien recouvert par une fenêtre dite pop-up.

En référence à la figure 4, le procédé selon l'invention comporte les étapes suivantes.

Dans une première étape, le dispositif détecte 41 un appui sur une première jauge 31.1 relative à un niveau d'énergie. Dans l'exemple, il s'agit de la jauge de la batterie de traction (mais il pourrait aussi s'agir d'un autre réservoir d'énergie).

Dans une deuxième étape, en réponse à la détection 41, le dispositif commande 42 l'affichage d'une application de navigation indiquant au moins une station de rechargement (dans l'exemple, il s'agit de station de recharge électrique). L'application utilise la localisation du véhicule, déterminé à l'aide du GPS, pour identifier les stations de gonflage les plus proches.

Dans une troisième étape, le dispositif détecte 43 un appui sur la deuxième jauge 31.2 relative à un niveau d'énergie. Dans l'exemple, il s'agit de la jauge du réservoir de carburant (mais il pourrait aussi s'agir d'un autre réservoir d'énergie).

Dans une quatrième étape, en réponse à la détection 43, le dispositif commande 44 l'affichage d'une application de navigation indiquant au moins une station de rechargement (dans l'exemple, il s'agit de station-service). Comme précédent, l'application utilise la localisation du véhicule, déterminé à l'aide du GPS, pour identifier les stations de gonflage les plus proches.

La figure 5 montre un deuxième exemple d'un affichage d'une pluralité d'objets graphiques sur l'écran 11. Ce deuxième exemple est similaire au premier mais il montre en outre l'affichage de l'application de navigation dans laquelle sont indiquées les stations-services les plus proches du véhicule. Il s'agit de l'application affichée lorsque dispositif détecte un appui sur la jauge de réservoir de carburant.

[Fig. 2] illustre schématiquement un dispositif 2 d'assistance à la recharge en énergie d'un véhicule, selon un exemple de réalisation particulier et non limitatif de la présente invention. Le dispositif 2 correspond par exemple à un dispositif embarqué dans le véhicule, par exemple un calculateur.

Le dispositif 2 est par exemple configuré pour la mise en œuvre des étapes du procédé décrit en regard de la figure 4. Des exemples d'un tel dispositif 2 comprennent, sans y être limités, un équipement électronique embarqué tel qu'un ordinateur de bord d'un véhicule, un calculateur électronique tel qu'une UCE (« Unité de Commande Electronique »), un téléphone intelligent, une tablette, un ordinateur portable. Les éléments du dispositif 2, individuellement ou en combinaison, peuvent être intégrés dans un unique circuit intégré, dans plusieurs circuits intégrés, et/ou dans des composants discrets. Le dispositif 2 peut être réalisé sous la forme de circuits électroniques ou de modules logiciels (ou informatiques) ou encore d'une combinaison de circuits électroniques et de modules logiciels.

Le dispositif 2 comprend un (ou plusieurs) processeur(s) 20 configurés pour exécuter des instructions pour la réalisation des étapes du procédé et/ou pour l'exécution des instructions du ou des logiciels embarqués dans le dispositif 2. Le processeur 20 peut inclure de la mémoire intégrée, une interface d'entrée/sortie, et différents circuits connus de l'homme du métier. Le dispositif 2 comprend en outre au moins une mémoire 21 correspondant par exemple à une mémoire volatile et/ou non volatile et/ou comprend un dispositif de stockage mémoire qui peut comprendre de la mémoire volatile et/ou non volatile, telle que EEPROM, ROM, PROM, RAM, DRAM, SRAM, flash, disque magnétique ou optique.

Le code informatique du ou des logiciels embarqués comprenant les instructions à charger et exécuter par le processeur est par exemple stocké sur la mémoire 21.

Selon différents exemples de réalisation particuliers et non limitatifs, le dispositif 2 est couplé en communication avec d'autres dispositifs ou systèmes similaires et/ou avec des dispositifs de communication, par exemple une TCU (de l'anglais « Telematic Control Unit » ou en français « Unité de Contrôle Télématique »), par exemple par l'intermédiaire d'un bus de communication ou au travers de ports d'entrée / sortie dédiés.

Selon un exemple de réalisation particulier et non limitatif, le dispositif 2 comprend un bloc 22 d'éléments d'interface pour communiquer avec des dispositifs externes, par exemple un serveur distant ou le « cloud », d'autres nœuds du réseau ad hoc. Les éléments d'interface du bloc 22 comprennent une ou plusieurs des interfaces suivantes :
- interface radiofréquence RF, par exemple de type Wi-Fi^{®} (selon IEEE 802.11), par exemple dans les bandes de fréquence à 2,4 ou 5 GHz, ou de type Bluetooth^{®} (selon IEEE 802.15.1), dans la bande de fréquence à 2,4 GHz, ou de type Sigfox utilisant une technologie radio UBN (de l'anglais Ultra Narrow Band, en français bande ultra étroite), ou LoRa dans la bande de fréquence 868 MHz, LTE (de l'anglais « Long-Term Evolution » ou en français « Evolution à long terme »), LTE-Advanced (ou en français LTE-avancé) ;
- interface USB (de l'anglais « Universal Serial Bus » ou « Bus Universel en Série » en français) ;
- interface HDMI (de l'anglais « High Definition Multimedia Interface », ou « Interface Multimedia Haute Definition » en français) ;
- interface LIN (de l'anglais « Local Interconnect Network », ou en français « Réseau interconnecté local »).

Des données, telles que par exemple un signal indiquant un niveau d'énergie d'un réservoir, sont par exemples chargées vers le dispositif 2 via l'interface du bloc 22 en utilisant un réseau Wi-Fi^{®} tel que selon IEEE 802.11, un réseau ITS G5 basé sur IEEE 802.11p ou un réseau mobile tel qu'un réseau 4G (ou 5G) basé sur la norme LTE (de l'anglais Long Term Evolution) définie par le consortium 3GPP notamment un réseau LTE-V2X.

Selon un autre exemple de réalisation particulier et non limitatif, le dispositif 2 comprend une interface de communication 23 qui permet d'établir une communication avec d'autres dispositifs (tels que d'autres calculateurs du système embarqué) via un canal de communication 24. L'interface de communication 23 correspond par exemple à un transmetteur configuré pour transmettre et recevoir des informations et/ou des données via le canal de communication 24 telle qu'un signal porteur indiquant le niveau d'énergie dans un réservoir. L'interface de communication 23 correspond par exemple à un réseau filaire de type CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (standardisé par la norme ISO 17458) ou Ethernet (standardisé par la norme ISO/IEC 802-3).

Selon un exemple de réalisation particulier et non limitatif, le dispositif 2 peut fournir des signaux de sortie à un ou plusieurs dispositifs externes, tels qu'un écran d'affichage 25, tactile ou non, un ou des haut-parleurs 26 et/ou d'autres périphériques 27 (capteur de contact) via respectivement des interfaces de sortie 28, 29 et 30. Selon une variante, l'un ou l'autre des dispositifs externes est intégré au dispositif 2.

## Revendications

1. Procédé d'assistance à la recharge en énergie d'un véhicule comportant un écran (11) tactile affichant une interface graphique, ladite interface graphique comprenant un premier objet graphique (31) affiché en permanence, lorsque l'écran (11) est allumé, et affichant au moins la vitesse du véhicule et au moins une jauge (31.1) relative à un niveau d'énergie, ladite interface comportant en outre au moins un deuxième objet graphique (32) affiché de façon éphémère, ledit procédé comportant des étapes de :
- détection (41) d'un appui sur la jauge (31.1),
- en réponse à la détection (41) d'un appui sur la jauge (31.1), commande (42) de l'affichage d'une application de navigation indiquant au moins une station de rechargement en énergie.

2. Procédé d'assistance à la recharge en énergie dans un véhicule selon la revendication 1, dans lequel le véhicule comporte un moteur thermique, la jauge (31.1) étant relative à un niveau de carburant dans un réservoir du véhicule, la station de rechargement indiquée par l'application de navigation étant une station-service.

3. Procédé d'assistance à la recharge en énergie dans un véhicule selon la revendication 1, dans lequel le véhicule comporte un moteur électrique, la jauge (31.1) étant relative à une quantité d'électricité dans une batterie du véhicule, la station de rechargement indiquée par l'application de navigation étant une station de recharge électrique.

4. Procédé d'assistance à la recharge en énergie dans un véhicule selon la revendication 1, dans lequel le véhicule comporte un moteur électrique et un moteur thermique, la jauge (31.1) étant relative à une quantité d'électricité dans une batterie, la station de rechargement indiquée par l'application de navigation étant une station de recharge électrique, le premier objet graphique (31) affichant en outre une deuxième jauge (31.2) relative à un niveau de carburant dans un réservoir du véhicule, ledit procédé comportant en outre des étape de :
- détection (43) d'un appui sur la deuxième jauge (31.2),
- en réponse à la détection (43) d'un appui sur la deuxième jauge (31.2), commande (44) de l'affichage d'une application de navigation indiquant au moins une station-service.

5. Programme d'ordinateur comprenant des instructions qui, lorsque le programme est exécuté par un ordinateur, conduisent celui-ci à mettre en œuvre le procédé selon l'une des revendications précédentes.

6. Dispositif d'assistance à la recharge en énergie d'un véhicule, ledit dispositif (2) comprenant une mémoire (21) associée à au moins un processeur (20) configuré pour la mise en œuvre des étapes du procédé selon l'une quelconque des revendications 1 à 4.

7. Véhicule comportant un écran (11) et un dispositif (2) selon la revendication précédente.

## Patentansprüche

1. Verfahren zur Unterstützung des Aufladens von Energie eines Fahrzeugs mit einem Touchscreen (11), der eine grafische Schnittstelle anzeigt, wobei die grafische Schnittstelle ein erstes grafisches Objekt (31) umfasst, das ständig angezeigt wird, wenn der Bildschirm (11) eingeschaltet ist, und das wenigstens die Fahrzeuggeschwindigkeit und wenigstens eine Anzeige (31.1) in Bezug auf einen Energiepegel anzeigt, wobei die Schnittstelle ferner wenigstens ein zweites grafisches Objekt (32) umfasst, das flüchtig angezeigt wird, wobei das Verfahren die Schritte umfasst:
- Detektieren (41) einer Stützung auf der Anzeige (31.1),
- als Reaktion auf die Erkennung (41) einer Drucktaste auf dem Messgerät (31.1), Steuerung (42) der Anzeige einer Navigationsanwendung, die mindestens eine Ladestation anzeigt.

2. Verfahren zur Unterstützung des Aufladens von Energie in einem Fahrzeug nach Anspruch 1, wobei das Fahrzeug einen Verbrennungsmotor umfasst, wobei die Anzeige (31.1) sich auf einen Kraftstoffstand in einem Tank des Fahrzeugs bezieht, wobei die von der Navigationsanwendung angezeigte Aufladestation eine Tankstelle ist.

3. Verfahren zur Unterstützung des Aufladens von Energie in einem Fahrzeug nach Anspruch 1, wobei das Fahrzeug einen Elektromotor umfasst, wobei die Messeinrichtung (31.1) sich auf eine Menge an Strom in einer Batterie des Fahrzeugs bezieht, wobei die durch die Navigationsanwendung angezeigte Aufladestation eine elektrische Aufladestation ist.

4. Verfahren zur Unterstützung des Aufladens von Energie in einem Fahrzeug nach Anspruch 1, wobei das Fahrzeug einen Elektromotor und einen Verbrennungsmotor umfasst, wobei die Messeinrichtung (31.1) sich auf eine Menge an Strom in einer Batterie bezieht, wobei die durch die Navigationsanwendung angezeigte Aufladestation eine elektrische Aufladestation ist, wobei das erste grafische Objekt (31) ferner eine zweite Messeinrichtung (31.2) anzeigt, die sich auf einen Kraftstoffstand in einem Fahrzeugtank bezieht, wobei das Verfahren ferner die Schritte umfasst:
- Erfassen (43) eines Drucks auf die zweite Messeinrichtung (31.2),
- als Reaktion darauf Bei Erkennung (43) eines Drucks auf die zweite Anzeige (31.2), Steuerung (44) der Anzeige einer Navigationsanwendung, die mindestens eine Tankstelle anzeigt.

5. Computerprogramm, das Befehle umfasst, die, wenn das Programm von einem Computer ausgeführt wird, diesen veranlassen, das Verfahren nach einem der vorhergehenden Ansprüche auszuführen.

6. Vorrichtung zur Unterstützung des Aufladens von Energie eines Fahrzeugs, wobei die Vorrichtung (2) einen Speicher (21) umfasst, der mit mindestens einem Prozessor (20) verbunden ist, der zur Durchführung der Schritte des Verfahrens nach einem der Ansprüche 1 bis 4 konfiguriert ist.

7. Fahrzeug mit einem Schirm (11) und einer Vorrichtung (2) nach dem vorhergehenden Anspruch.

## Claims

1. Method of assisting the recharging of a vehicle with energy comprising a touch screen (11) displaying a chart interface, said chart interface comprising a first chart object (31) permanently displayed when the screen (11) is switched on and displaying at least the speed of the vehicle and at least one gauge (31. 1) relating to an energy level, said interface further comprising at least a second chart object (32) displayed in an ephemeral manner, said method comprising steps of:
- detection (41) of a pressure on the gauge (31. 1),
- in response to the detection (41) of a pressure on the gauge (31. 1), order (42) of the display of a navigation application indicating at least one station in terms of energy.

2. Method for assisting the recharging of energy in a vehicle according to claim 1, wherein the vehicle comprises a heat engine, the gauge (31.1) relating to a fuel level in a tank of the vehicle, the recharging station indicated by the navigation application being a service station.

3. Method for assisting the recharging of energy in a vehicle according to claim 1, wherein the vehicle comprises an electric motor, the gauge (31.1) relating to a quantity of electricity in a battery of the vehicle, the recharging station indicated by the navigation application being an electric recharging station.

4. Method for assisting the recharging of energy in a vehicle according to claim 1, wherein the vehicle comprises an electric motor and a heat engine, the gauge (31.1) relating to a quantity of electricity in a battery, the recharging station indicated by the navigation application being an electric recharging station, the first chart object (31) further displaying a second gauge (31.2) relating to a level of fuel in a tank of the vehicle, said method further comprising steps of:
- detecting (43) a pressure on the second gauge (31.2),
- in response to the detection (43) of a pressure on the second gauge (31.2), order (44) of the display of a navigation application indicating at least one service station.

5. Computer plan comprising instructions which, when the plan is executed by a computer, lead the latter to implement the method according to one of the previous claims.

6. Device for assisting the recharging of a vehicle with energy, said device (2) comprising a memory (21) associated with at least one processor (20) configured for implementing the steps of the method according to any one of claims 1 to 4.

7. Vehicle comprising a screen (11) and a device (2) according to the previous claim.
